# FASCICULE DE BREVET EUROPEEN

(11) **EP 0 549 468 B1**
(45) Date de publication et mention de la délivrance du brevet: **07.12.1994**
(21) Numéro de dépôt: 92403534.8
(22) Date de dépôt: 23.12.1992
(51) Int. Cl.: B29C 67/14, B29D 31/00

(54) **Procédé de fabrication d'une pale de soufflante en matériau composite et outillage de moulage**
Verfahren zur Herstellung eines Gebläseblattes aus Verbundwerkstoff und Formvorrichtung
Method of manufacturing a composite material fan blade and moulding device

(30) Priorité: 24.12.1991 FR 9116096
(43) Date de publication de la demande: 30.06.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Henrio, Philippe, F-91510 Lardy (FR)

(56) Documents cités:
- US-A- 4 824 631

## Description

La présente invention concerne un procédé et un outillage de moulage pour mouler un article en matériau composite ayant des profils différents de chaque côté, notamment une paie de soufflante en matériau composite.

On connaît déjà des procédés pour réaliser des articles en matériau composite selon lesquels on empile des plis de pré-imprégnés entre un gabarit et une membrane imperméable aux gaz et on chauffe l'ensemble dans un autoclave en aspirant les gaz hors du volume enclos par ladite membrane.

FR 2 530 538 décrit un procédé de fabrication de matériau composite dans lequel des pré-imprégnés sont placés sur une forme chauffée. On recouvre le tout d'un film micraporeux, d'un matériau respirant et d'une membrane imperméable. On fait le vide par aspiration puis on chauffe la forme pour dégazer d'abord la résine, puis la cuire. La cuisson se fait à la pression atmosphérique. Ce procédé est particulièrement adapté aux pièces "formant peau", pour lesquelles le profil supérieur suit, à l'épaisseur du stratifié près, le profil intérieur.

FR 2 574 343 décrit également un procédé de fabrication de pièces en matériau composite, notamment des pièces aux formes anguleuses. Les pré-imprégnés séparés par des films subissent un premier traitement de mise en forme par cuisson partielle. Puis on enlève les films, et on empile les pré-imprégnés préformés entre un gabarit et une membrane imperméable et l'ensemble est alors placé dans un autoclave et chauffé. Dans ce cas aussi, la pièce obtenue a une épaisseur homogène.

L'état de la technique est également illustré par FR 2 526 011, qui concerne un procédé de fabrication d'un panneau feuilleté verre-plastique, et FR 2 459 118 qui décrit un procédé pour mouler à haute température, sous pression dans un autoclave, une ou plusieurs feuilles de pré-imprégnés à base de résine thermodurcissable et de fibres.

Les pièces composites réalisées par les procédés décrits dans les documents précédents, sont cuites en autoclave où la pression permettant le compactage du stratifié est isostatique. Cependant ces procédés présentent l'inconvénient de n'assurer la géométrie parfaite du profil que du côté du gabarit, du fait de la présence de produits d'environnement, films plastiques, tissus et feutres de verre, entre les pré-imprégnés et la membrane. Ces procédés sont donc plus particulièrement adaptés aux pièces "formant peau" pour lesquelles le profil supérieur suit, à l'épaisseur du stratifié près, le profil intérieur. Aussi, on ne peut avoir recours à ces procédés pour réaliser des pièces à double profil, telles que des aubes de soufflante.

Actuellement pour réaliser des pales en matériau composite, les plis de pré-imprégnés sont empilés dans un moule, puis un poinçon vient comprimer ces plis, assurant ainsi le profil supérieur de la pièce. La cuisson se fait sous presse, laquelle transmet en conséquence un effort axial, ce qui ne donne pas entièrement satisfaction.

US-A-4 824 631 par ailleurs décrit une outillage de moulage conformément à le préambule de la revendication 2 et un procédé pour mouler sous vide et sous pression isostatique un article en matériau composite, selon lequel on empile des plis de pré-imprégnés entre un gabarit et une membrane imperméable aux gaz et on chauffe l'ensemble dans un autoclave en aspirant les gaz hors du volume enclos par ladite membrane, de manière à pouvoir fabriquer par ce procédé des articles ayant des profils différents de chaque côté, et on utilise un gabarit sous forme d'un noyau rigide, ledit gabarit présentant une surface supérieure ayant une forme complémentaire à l'un des profils de l'article à réaliser, et sur laquelle les plis du pré-imprégné sont superposés, et on interpose, entre la membrane imperméable et la superposition de pré-imprégnés, une coquille semi-rigide dont la surface intérieure a une forme complémentaire à l'autre profil de l'article à réaliser, et des moyens pour évacuer les gaz hors du volume délimité par ladite coquille et ledit gabarit.

Le but de la présente invention est d'apporter des améliorations aux procédés connus et l'invention atteint son but par le fait qu'on dispose une jupe de coquille le long d'une paroi latérale de gabarit et, au cours du chauffage, ladite jupe de coquille coulisse librement le long de la paroi dudit gabarit.

Grâce à cette coquille mobile par rapport au noyau, l'article est à côte finie à la fin de la cuisson et la pression de compactage s'exerce uniformément sur toutes les surfaces de l'article.

La présente invention concerne également un outillage de moulage pour la mise en oeuvre du procédé comme décrit dans la revendication 2.

Cet outillage comprend un gabarit sous forme d'un noyau rigide présentant une paroi latérale et une coquille semi-rigide comportant une jupe susceptible de coulisser librement le long de la paroi latérale dudit gabarit.

Avantageusement, le pourtour de la jupe est renforcé.

Avantageusement, la coquille comporte des raidisseurs.

D'autres avantages et caractéristiques de l'invention ressortiront à la lecture de la description suivante faite à titre d'exemple et en référence aux dessins annexés dans lesquels :
la figure 1 représente une coupe transversale de l'outillage de moulage utilisé pour la mise en oeuvre du procédé de l'invention avant la mise en place de la membrane imperméable,
la figure 2 représente une coupe transversale de l'outillage de moulage de la figure 1, après la cuisson de l'article en matériau composite en autoclave, et

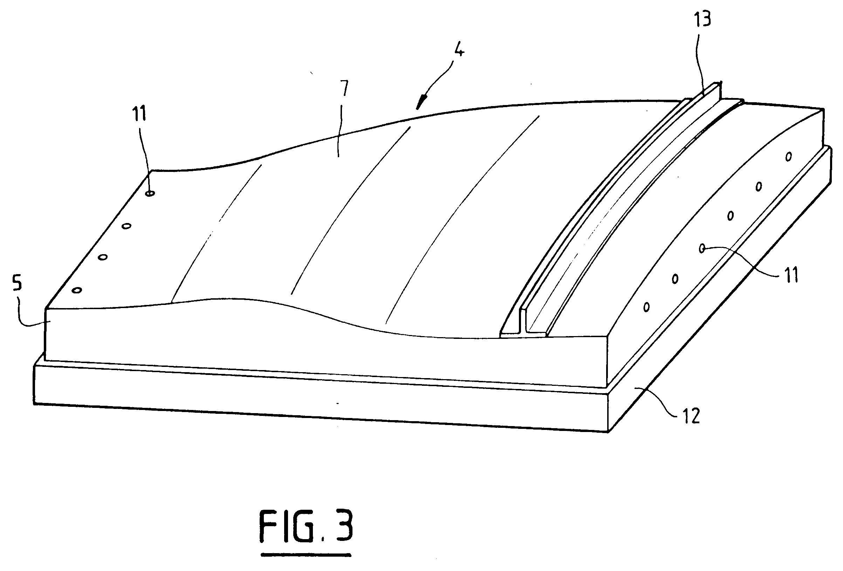

la figure 3 montre en perspective un mode de réalisation de la coquille utilisée pour la fabrication d'une pale de soufflante.

Les dessins montrent un mode de réalisation d'un outillage de moulage utilisé pour la fabrication d'un article en matériau composite comportant des profils différents des deux côtés, notamment une pale de soufflante, par le procédé de cuisson en autoclave.

Cet outillage de moulage 1 comporte, d'une part, un gabarit 2 qui se présente sous la forme d'un noyau dont une extrémité présente une surface 3 conformée à un profil de l'article à réaliser, et, d'autre part, une coquille ou couvercle 4 présentant une jupe 5 pouvant coulisser le long de la paroi latérale 6 du gabarit 2. La section intérieure de la jupe 5 est sensiblement égale à la section transversale du noyau 2. La paroi supérieure 7 de la coquille 5 présente une surface inférieure conformée à l'autre profil de l'article à réaliser.

De préférence, le gabarit 2 présente dans sa partie inférieure une embase 8 destinée à permettre la fixation d'une membrane 9 imperméable aux gaz.

Le noyau 2 et la coquille 4 sont réalisés en un matériau ayant un coefficient de dilatation thermique égal à celui de l'article à réaliser. Ce matériau est de préférence un matériau composite, en carbone époxy. Ceci permet de réaliser une coquille 4 dont la paroi supérieure 7 est à la fois très fine pour la transmission de la pression et très rigide, pour l'obtention du profil de l'article à réaliser, ainsi qu'un outillage de moulage 1 léger et peu onéreux. A titre indicatif, la paroi supérieure 7 a une épaisseur moyenne de 0,5 mm.

Les plis des pré-imprégnés 10 sont empilés sur la surface 3 supérieure du noyau 2.

L'épaisseur des plis 10 et l'empilage sont calculés de telle sorte que l'article fini soit à "côte finie" après la cuisson.

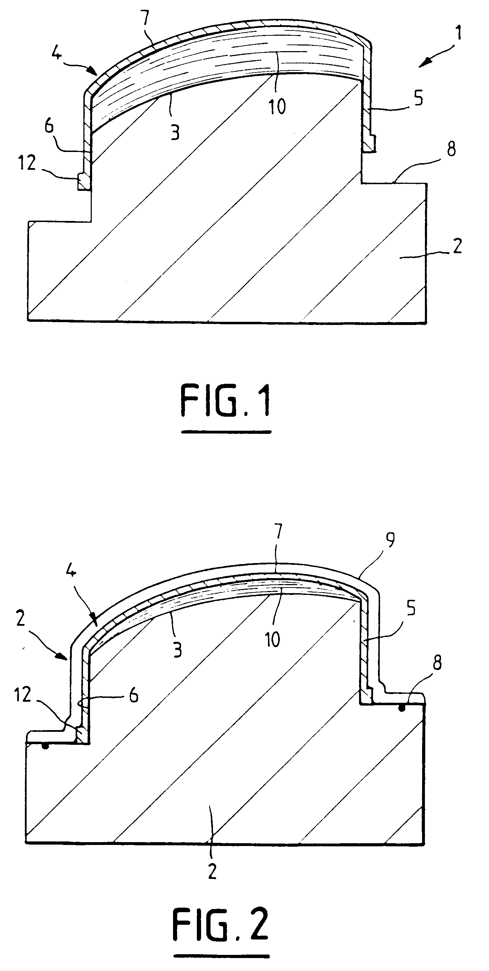

La coquille 4 est ensuite disposée au-dessus de l'empilage des pré-imprégnés 10 comme on le voit sur la figure 1. La hauteur de la jupe 5 est calculée pour que la coquille 4 recouvre la partie haute du noyau 2 pour éviter tout glissement et fuite du matériau à compacter.

La membrane 9 est ensuite fixée de manière étanche sur l'embase 8 du noyau 2 et l'ensemble est introduit dans un autoclave. Cette membrane 9 est imperméable aux gaz et elle est équipée de moyens, en soi connus, destinés à aspirer les gaz hors du volume enclos par ladite membrane. Il faut noter que la membrane 9 entoure complètement la coquille 4 et que celle-ci peut coulisser librement le long de la paroi latérale 6 du noyau 2 sous l'action de la pression régnant dans l'autoclave.

La coquille 4 comporte des vents de dégazage 11 permettant l'évacuatian des gaz de cuisson issus des pré-imprégnés 10.

Le pourtour inférieur 12 de la jupe 5 est renforcé pour éviter à la coquille 4 de s'ouvrir sous l'effet de la pression. La coquille 4 comporte de plus sur sa face supérieure des raidisseurs 13.

Au cours de la cuisson, la pression régnant dans l'autoclave s'exerce uniformément sur toute la surface extérieure de la coquille 4. L'empilage des pré-imprégnés 10 perd environ un tiers de son volume, c'est-à-dire un tiers de son épaisseur initiale. La hauteur de la paroi latérale 6 du noyau 2 est évidemment suffisante pour permettre un coulissement libre de la coquille 4.

Après cuisson et démontage de l'outillage de moulage 1, il ne reste plus qu'à ébavurer l'article obtenu.

## Revendications

1. Procédé pour mouler un article en matériau composite ayant des profils différents de chaque côté, notamment une paie de soufflante, selon lequel on empile des plis de pré-imprégnés (10) entre un gabarit (2) et une membrane (9) imperméable aux gaz et on chauffe l'ensemble dans un autoclave en aspirant les gaz hors du volume enclos par ladite membrane (9),
on utilise un gabarit (2) sous forme d'un noyau rigide, ledit gabarit présentant une surface supérieure (3) ayant une forme complémentaire à l'un des profils de l'article à réaliser et sur laquelle les plis de pré-imprégnés (10) sont superposés, et
on interpose, entre la membrane (9) imperméable et la superposition des pré-imprégnés (10), une coquille (4) semi-rigide dont la surface intérieure a une forme complémentaire à l'autre profil de l'article à réaliser, et des moyens (11) pour évacuer les gaz hors du volume délimité par ladite coquille (4) et ledit gabarit (2) caractérisé en ce qu'on dispose une jupe (5) de ladite coquille (4) le long d'une paroi latérale (6) dudit gabarit (2) et en ce que, au cour du chauffage, ladite jupe (5) de coquille coulisse librement le long de la paroi (6) dudit gabarit (2).

2. Outillage de moulage, comprenant un gabarit (2) sous forme d'un noyau rigide présentant une surface supérieure (3) ayant une forme complémentaire à l'un des profils de l'article à réaliser, et une coquille (4) semi-rigide et des moyens (11) pour évacuer les gaz du volume délimité par ladite coquille (4) et ledit gabarit (2), ladite coquille (4) présentant une surface intérieure ayant une forme conjuguée à l'autre profil de l'article à réaliser caractérisé en ce qu ledit gabarit (2) présente une paroi latérale (6) et ladite coquille (4) comporte une jupe (5) cylindrique susceptible de coulisser librement le long de la paroi (6) cylindrique dudit gabarit (2), ledit outillage etant prévu pour la mise en oeuvre du procédé de la revendication 1.

3. Outillage selon la revendication 2, caractérisé en ce que le pourtour (12) de la jupe (5) est renforcé

4. Outillage selon la revendication 2, caractérisé en ce que la coquille (4) présente des raidisseurs (13) sur sa face supérieure.

5. Outillage selon la revendication 2, caractérisé en ce que le gabarit (2) et la coquille (4) sont réalisés en carbone/époxy.

## Claims

1. Process for moulding a component in composite material which has different profiles on each face, notably the blade of a fan, in accordance with which layers of pre-impregnates (10) are laid on top of one another between a former (2) and a membrane (9) impermeable to gases and the whole is heated in a autoclave whilst exhausting the gases from within the space formed by the said membrane (9), using a former (2) in the shape of a rigid core, the said former presenting an upper surface (3) having a shape complementary to one of the profiles of the article to be made and on which the layer of pre-impregnates (10) are laid and, between the impermeable membrane (9) and the pile of pre-impregnates (10) is interposed a semi-rigid shell (4) whose inner face has a shape complementary to the other profile of the article to be made, and means (11) of exhausting the gases from the space delimited by the said shell (4) and the said former (2), characterised in that the said shell (4) has a skirt (5) along the side wall (6) of the said former (2) and in that during the heat-curing process, the said skirt (5) slides freely on the wall (6) of the said former (2).

2. Moulding tool, comprising a former (2) in the shape of a rigid core presenting an upper surface (3) with a shape complementary to one of the profiles of the article to be made, and a semi rigid shell (4) and means of exhausting the gases from within the space delimited by the said shell (4) and the said former (2), the said shell (4) presenting an inner surface of a shape appropriately matched to the other profile of the article to be made, characterised in that the said former (2) has a side wall (6) and the said shell (4) comprises a cylindrical skirt (5) able to slide freely over the length of the cylindrical wall (6) of the said former (2), the said tool being provided for carrying out the process of claim 1.

3. Tool in accordance with Claim 2, characterised in that the circumference (12) of the skirt (5) is reinforced.

4. Tool in accordance with Claim 2, characterized in that the shell (4) has stiffeners (13) on its upper face.

5. Tool in accordance with Claim 2, characterized in that the former (2) and the shell (4) are made of graphite/epoxy resin.

## Patentansprüche

1. Verfahren zum Gießen eines Gegenstands aus Verbundmaterial mit unterschiedlichen Profilen auf jeder Seite, insbesondere eines Gebläseblattes, gemäß dem vorgetränkte Lagen (10) zwischen eine Schablone (2) und eine gasundurchlässige Membran (9) geschichtet werden und das Ganze in einem Autoklav erhitzt wird, wobei die Gase aus den von der Membran (9) eingeschlossenen Volumen abgesaugt werden,
wobei eine Schablone (2) in Form eines steifen Kerns verwendet wird, wobei die Schablone eine Oberseite (3) aufweist, die die komplementäre Form eines Profils des zu schaffenden Gegenstands aufweist und auf der die vorgetränkten Lagen (10) aufeinandergelegt werden, und
wobei zwischen der undurchlässigen Membran (9) und der Übereinanderlagerung der vorgetränten Lagen (10) eine halbstarre Schale (4), deren Innenseite eine komplementäre Form des anderen Profils des zu schaffenden Gegenstands aufweist, und eine Einrichtung (11) zum Ablassen der Gase aus dem durch die Schale (4) und der Schablone (2) abgegrenzten Volumen angebracht werden,
dadurch **gekennzeichnet**,
daß eine Schürze (5) der Schale (4) längs einer Seitenwand (6) der Schablone (2) vorgesehen wird und daß während des Erhitzens die Schürze (5) der Schale sich längs der Wand (6) der Schablone (2) frei verschiebt.

2. Gießvorrichtung mit einer Schablone (2) in Form eines steifen Kerns mit einer Oberseite (3), die eine komplementäre Form eines der Profile des zu schaffenden Gegenstands aufweist, einer halbstarren Schale (4) und einer Einrichtung (11) zum Ablassen der Gase des durch die Schale (4) und die Schablone (2) begrenzten Volumens, wobei die Schale (4) eine Innenseite aufweist, die eine konjugierte Form des anderen Profils des zu schaffenden Gegenstands aufweist,
dadurch **gekennzeichnet**,
daß die Schablone (2) eine Seitenwand (6) aufweist und die Schale (4) eine zylindrische Schürze (5) aufweist, die frei längs der zylindrischen Wand (6) der Schablone (2) verschiebbar ist, wobei die Vorrichtung zur Ausführung des Verfahrens gemäß` Anspruch 1 vorgesehen ist.

3. Vorrichtung nach Anspruch 2,
dadurch **gekennzeichnet**,
daß der äußere Umfang (12) der Schürze (5) verstärkt ist.

4. Vorrichtung nach Anspruch 2,
dadurch **gekennzeichnet**,
daß die Schale (4) Versteifungsrippen (13) auf ihrer Oberseite aufweist.

5. Vorrichtung nach Anspruch 2,
dadurch **gekennzeichnet**,
daß die Schablone (2) und die Schale (4) aus Karbonfaser-Epoxy ausgeführt sind.
